# EUROPEAN PATENT SPECIFICATION

(11) **EP 0 481 126 B1**
(45) Date of publication and mention of the grant of the patent: **06.03.1996**
(21) Application number: 90125851.7
(22) Date of filing: 31.12.1990
(51) Int. Cl.: C08K 5/00, C08L 69/00

(54) **Flame retarded polycarbonates**
Flammwidrige Polycarbonate
Polycarbonates à combustion retardée

(30) Priority: 15.10.1990 IL 96007
(43) Date of publication of application: 22.04.1992
(73) Proprietor: Bromine Compounds Ltd., Beer-Sheva 84101 (IL)
(72) Inventor: Peled, Michael, Beer-Sheva (IL); Manor,Meir, Beer-Sheva (IL)
(74) Representative: Prato, Roberto

(56) References cited:
- EP-A- 0 218 215
- GB-A- 1 569 070
- DATABASE WPIL Week 8820, Derwent Publications Ltd., London, GB; AN 88-138013

## Description

### Field of The Invention

The present invention relates to flame retarded transparent plastic compositions. More particularly, the invention relates to polycarbonate compositions which incorporate flame-retardant additives, and which retain their transparency.

### BACKGROUND OF THE INVENTION

Polycarbonates are used in the art for a variety of applications, for which flame retardancy is of importance, such as households (e.g., bath accessories), buildings (e.g., glass substitutes), and lighting covers and fixtures. However, one of the problems deriving from the incorporation of flame-retardant additives into polycarbonates is that these additives render the polycarbonates substantially non-transparent. Because many applications of polycarbonates require that the material be transparent, it is apparent that it is highly desirable to provide flame retarded polycarbonates which are substantially transparent, and the transparency of which is not substantially affected by the addition of flame-retardant agents.

### SUMMARY OF THE INVENTION

It is an object of the present invention to provide such transparent flame-retarded polycarbonate compositions.

The flame retarded transparent plastic compositions of the invention comprise a polycarbonate and a flame-retardant additive selected from pentabromobenzyl-monoacrylate (PBB-MA), tribromostyrene (TBS) and tribromophenylmaleimide (TBPMI), each of the said additives being present alone or in combination of two or three of the said additives.

According to a preferred embodiment of the invention, the composition comprises:
- at least 85 wt/% polycarbonates;
- up to 10 wt/% PBB-MA;
- up to 10 wt/% TBS;
- up to 10 wt/% TBPMI; and
- optionally, conventional plastic additives. Such conventional additives are known to the skilled person, and need not be detailed herein. Preferably, TBS is present in amounts of up to 5%, for optimal transparency.

The compositions of the invention are prepared by mixing a polycarbonate matrix with a flame-retardant additive comprising one or more of PBB-MA, TBS and TBPMI, and compounding the same at an elevated temperature. This elevated temperature is such that the polycarbonate melts, and preferably at least part of the additive mixture polymerizes during compounding.

### DETAILED DESCRIPTION OF THE INVENTION

The above and other characteristics and advantages of the invention will be further understood through the following description of illustrative and non-limitative examples.

### Example 1

### Transparency of Compositions Containing PBB-MA

In order to test the suitability of compositions containing PBB-MA alone, polycarbonate ®Makrolon 2405 (which is a linear amorphous thermoplastic polycarbonate, manufactured by Bayer AG) was compounded with the following FR additives: ®Pyrocheck 68 (brominated polystyrene, Ferro, Inc.), Pentabromobenzyl-polyacrylate (PBB-PA - FR 1025, Bromine Compounds Limited) and PBB-MA (Bromine Compounds Limited). The results are detailed in Table II below. From the results in the table it can be seen that, while other properties, such as UL-94 and HDT are very similar, PBB-MA is the only additive which provides a transparent product.

Transparency in all tests herein was tested by visual inspection of specimens of 1.6 mm and 3.2 mm thickness, and by the following Test Procedure.

### Test Procedure

A UV-Visible Sprectrophotometer (Philips PU-8800) was used to test the transmittance of samples of different polycarbonates. Transmittance at different wavelengths was measured, as detailed in Table I below, in which two examples are shown: neat polycarbonate (Makrolon® 2405), and the same polycarbonate containing 6wt% of PBB-MA. The samples consisted of 0.8 mm thick strips, with a width suitable for the housing of the spectrophotometer. Reduction of 10-20% in transmittance was observed in transparent samples.

**Table I**

| **Transmittance of neat and FR polycarbonates** | | |
|---|---|---|
| | **Transmittance** | |
| **Wave Length** | **PC Neat** | **PC+6% PBB-MA** |
| 500 | 88 | 81 |
| 600 | 88 | 85 |
| 700 | 89 | 87 |
| 800 | 89 | 88 |

### Compositions Tested

Compounding was done in a plasti-corder at 250-260°C, with subsequent press-molding at 250-270°C and a pressure of 20 Bar.

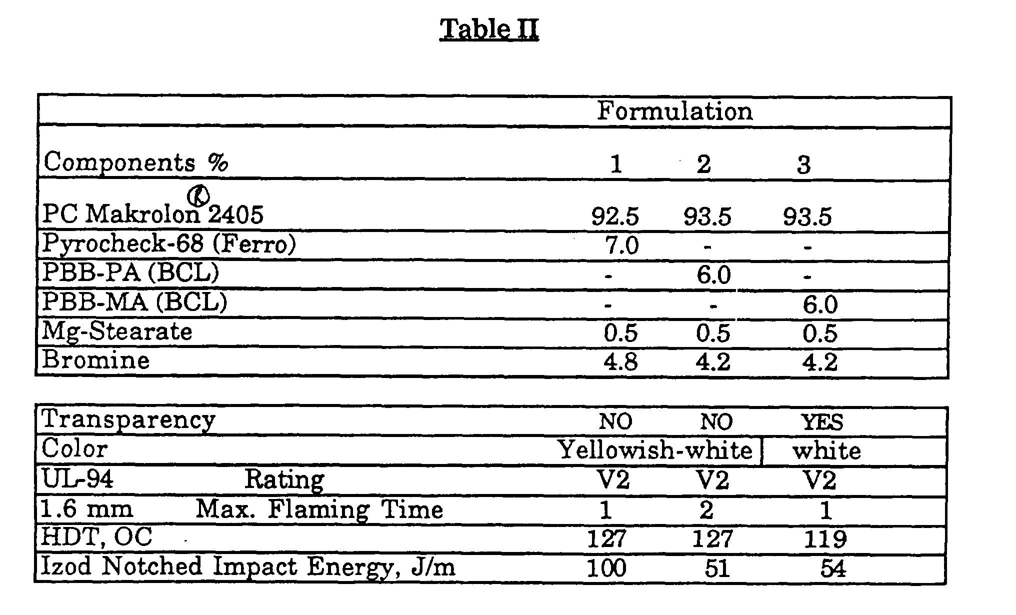

### Example 2

Various compositions were prepared, containing PBB-MA, TBS and TBPMI in polycarbonate. The polycarbonate used was as in Example 1 Makrolon® 2405 (Bayer AG). All formulations contained 1% stearic acid, all formulations contained 4.3% bromine, and the tests were as described above. All compositions obtained in this example were transparent, as defined above. Best transparency results were obtained with formulations 1-3 and 6-8. Results are shown in Table III below.

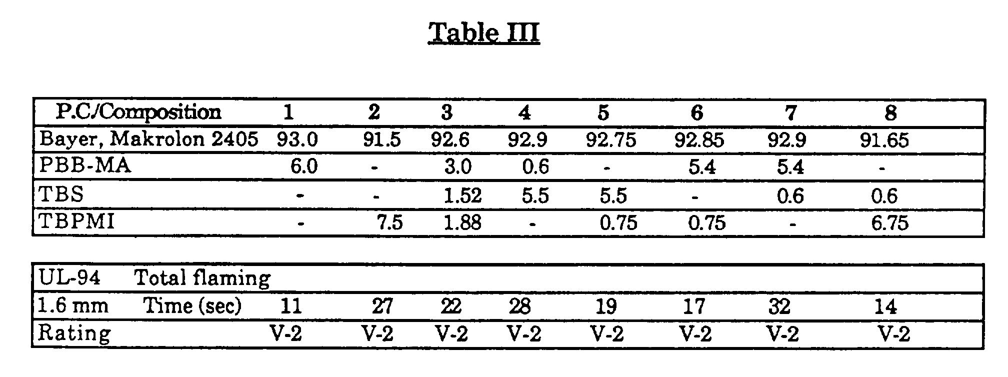

From the above examples, it is apparent that it is possible to provide polycarbonates which are made flame-retardant according to the invention, by the incorporation of an additive chosen from mixtures of the flame-retardant additives, or containing one of them, and this, furthermore, is achieved while maintaining good flame-retardant properties of the final material, as can be seen from the data provided in the examples. Of course, as will be apparent to the skilled person, the examples provided herein are only provided in order to illustrate the invention, and it is possible to provide many different compositions containing different proportions of the flame-retardants, without exceeding the scope of the invention.

## Claims

1. A flame retarded transparent plastic composition comprising a polycarbonate and a flame-retardant additive selected from pentabromobenzyl-monoacrylate, tribromostyrene and tribromophenyl maleimide, each of the said additives being present alone or in combination of two or three of the said additives.

2. A composition according to Claim 1 comprising:
- at least 85 wt/% polycarbonate;
- up to 10 wt/% pentabromobenzyl-monoacrylate;
- up to 10 wt/% tribromostyrene; and
- up to 10 wt/% tribromophenyl maleimide.

3. A composition according to Claim 1 comprising:
- at least 85 wt/% polycarbonate;
- up to 10 wt/% pentabromobenzyl-monoacrylate;
- up to 5 wt/% tribromostyrene; and
- up to 10 wt/% tribromophenyl maleimide.

4. A process for the preparation of a flame retarded transparent plastic composition, comprising melt compounding a polycarbonate matrix with a flame-retardant additive comprising one or more of pentabromobenzyl-monoacrylate, tribromostyrene and tribromophenyl maleimide.

5. A process according to claim 4, wherein at least part of the flame-retardant additive polymerizes during the compounding operation.

## Patentansprüche

1. Flammhemmend ausgerüstete transparente Kunststoffzusammensetzung mit einem Polycarbonat und einem aus Pentabrombenzylmonoacrylat, Tribromstyrol und Tribromphenylmaleinimid ausgewählten Flammschutzmittelzusatz, wobei jeder der genannten Zusätze allein oder als Kombination von zwei oder drei Zusätzen vorhanden ist.

2. Zusammensetzung nach Anspruch 1 mit:
- wenigstens 85 Gew.-% Polycarbonat;
- bis zu 10 Gew.-% Pentabrombenzylmonoacrylat;
- bis zu 10 Gew.-% Tribromstyrol; und
- bis zu 10 Gew.-% Tribromphenylmaleinimid.

3. Zusammensetzung nach Anspruch 1 mit:
- wenigstens 85 Gew.-% Polycarbonat;
- bis zu 10 Gew.-% Pentabrombenzylmonoacrylat;
- bis zu 5 Gew.-% Tribromstyrol; und
- bis zu 10 Gew.-% Tribromphenylmaleinimid.

4. Verfahren zur Herstellung einer flammhemmend ausgerüsteten transparenten Kunststoffzusammensetzung, bei dem eine Polycarbonatmatrix mit einem Flammschutzmittelzusatz in der Schmelze kompoundiert wird, wobei der Zusatz eine oder mehrere der Verbindungen Pentabrombenzylmonoacrylat, Tribromstyrol und Tribromphenylmaleinimid umfaßt.

5. Verfahren nach Anspruch 4, dadurch gekennzeichnet, daß wenigstens ein Teil des Flammschutzmittelzusatzes während des Kompoundierungsvorganges polymerisiert.

## Revendications

1. Composition plastique transparente ignifugée comprenant un polycarbonate et un additif retardateur d'inflammation choisi entre le mono-acrylate de pentabromobenzyle, le tribromostyrène et le tribromophénylmaléimide, chacun desdits additifs étant présent seul ou conjointement avec l'un ou les deux autres.

2. Composition selon la revendication 1, comprenant :
- au moins 85 % en poids de polycarbonate ;
- jusqu'à 10 % en poids de mono-acrylate de pentabromobenzyle ;
- jusqu'à 10 % en poids de tribromostyrène et
- jusqu'à 10 % en poids de tribromophénylmaléimide.

3. Composition selon la revendication 1, comprenant :
- au moins 85 % en poids de polycarbonate ;
- jusqu'à 10 % en poids de mono-acrylate de pentabromobenzyle ;
- jusqu'à 5 % en poids de tribromostyrène, et
- jusqu'à 10 % en poids de tribromophénylmaléimide.

4. Procédé pour la préparation d'une composition plastique transparente ignifugée, consistant à mélanger à l'état fondu une matrice de polycarbonate avec un additif retardateur d'inflammation comprenant un ou plusieurs des composés suivants : mono-acrylate de pentabromo-benzyle, tribromostyrène et tribromophénylmaléimide.

5. Procédé selon la revendication 4, dans lequel au moins une partie de l'additif retardateur d'inflammation se polymérise au cours de l'opération de mélangeage.
